Europäisches Patentamt

(19) European Patent Office

Office européen des brevets

(11) Numéro de publication: **0 116 794
B1**

(12) **FASCICULE DE BREVET EUROPEEN**

(45) Date de publication du fascicule du brevet:
19.11.87

(21) Numéro de dépôt: 83402367.3

(22) Date de dépôt: 07.12.83

(51) Int. Cl.⁴: **H 04 N 9/64**

(54) **Circuit et procédé de décodage de chrominance à ligne à retard analogique ou numérique dans un système de télévision de type PAL ou SECAM.**

(30) Priorité: **10.12.82 FR 8220775**

(43) Date de publication de la demande:
**29.08.84 Bulletin 84/35**

(45) Mention de la délivrance du brevet:
**19.11.87 Bulletin 87/47**

(84) Etats contractants désignés:
**AT CH DE FR GB IT LI NL**

(56) Documents cités:
**RADIO MENTOR ELECTRONIC, vol. 46, nos. 7/8, juillet août 1980, pages 212-213, Munich, DE; "Digitale Signalverarbeitung im Farbfernseher"**

(73) Titulaire: **THOMSON-CSF, 173, Boulevard Haussmann, F-75379 Paris Cédex 08 (FR)**

(72) Inventeur: **Douziech, Patrick, THOMSON-CSF SCPI 173, bld Hausmann, F-75379 Paris Cedex 08 (FR)**
Inventeur: **Imbert, Michel, THOMSON-CSF SCPI 173, bld Hausmann, F-75379 Paris Cedex 08 (FR)**

(74) Mandataire: **Ruellan-Lemonnier, Brigitte et al, THOMSON-CSF SCPI 19, avenue de Messine, F-75008 Paris (FR)**

## Description

La présente invention concerne le domaine des circuits de télévision couleur et, plus particulièrement, des circuits de décodage de chrominance. Elle s'applique notamment à la réception d'émission télévisées transmises selon les normes SECAM ou PAL.

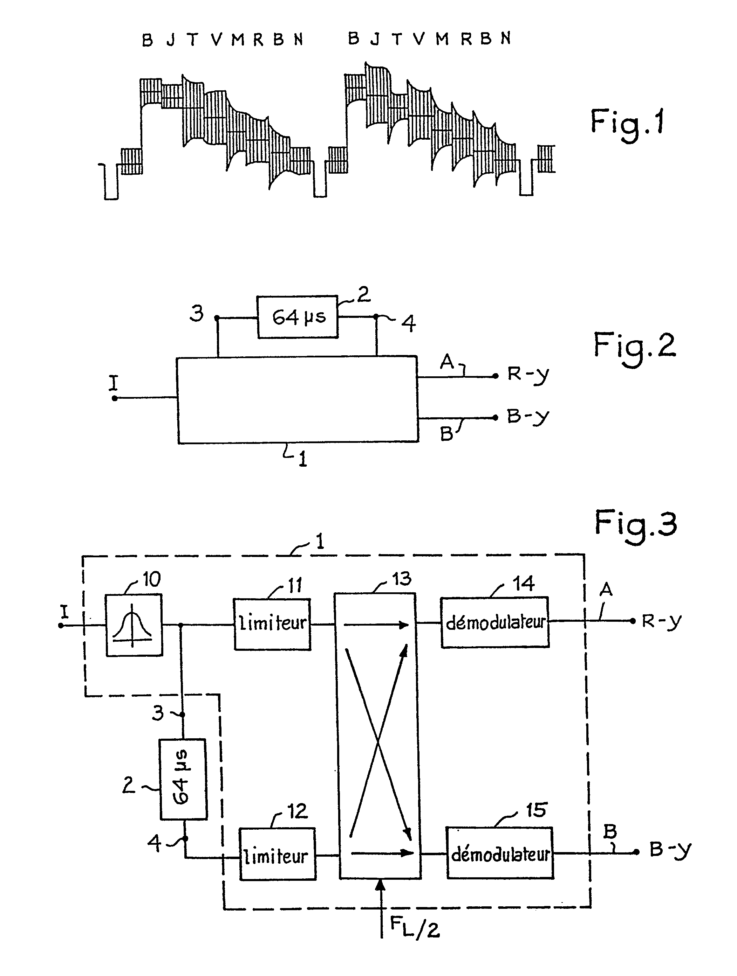

A titre de rappel, la figure 1 représente la structure de deux lignes successives transmises dans un système de télévision couleur du type SECAM dans le cas où l'émetteur fournit l'image d'une mire de barres verticales colorées, la barre de gauche étant blanche et celle de droite noire. Pour chaque couleur, on observe la superposition d'un signal continu portant une information de luminance et d'un signal alternatif dont la modulation porte une information de chrominance.

Dans les systèmes PAL et SECAM, pour disposer de toutes les informations de chrominance relatives à une ligne affichée, il faut disposer simultanément d'informations partielle se trouvant sur deux lignes émisés successives.

Ainsi, un circuit de décodage de chrominance se présente très schématiquement de la façon illustrée en figure 2. A partir de signaux d'entrée I correspondant au signal vidéo composite, un circuit intégré 1 fournit sur ses voies de sortie A et B les signaux de chrominance R-Y et B-Y. Au circuit intégré est nécessairement associée une ligne à retard 2, la valeur du retard correspondant à la durée d'une ligne, c'est-à-dire 64 microsecondes dans le cas d'une émission à 625 lignes par image. Ainsi, il est possible de combiner à un certain niveau du circuit intégré 1 les signaux relatifs à une ligne émise avec ceux de la ligne émise précédemment, le résultat de cette combinaison permettant de fournir les signaux de chrominance R-Y et B-Y relatifs à une ligne à afficher. Bien qu'ils ne soient pas représentés dans la figure, certains éléments discrets sont généralement associés au circuit intégré 1, essentiellement des condensateurs de forte valeur utiles pour les circuits de filtrage, par exemple au niveau du filtre en cloche d'un décodeur SECAM.

A l'heure actuelle, le plus généralement, la ligne à retard 2 est une ligne à retard ultrasonique.

Un inconvénient d'une telle ligne à retard est que c'est un composant encombrant. D'autre part, la prévision d'une ligne à retard ultrasonique dans un décodeur SECAM est susceptible d'introduire une certaine diaphotie, c'est-à-dire un mélange des informations contenues dans deux lignes successives. Dans le cas d'un décodeur PAL, il est nécessaire d'associer à une ligne à retard ultrasonique au moins deux moyens de réglage, ce qui augmente le coût de fabrication.

Ainsi, on a suggéré de remplacer la ligne à retard ultrasonique par une ligne à retard numérique, les inconvénients d'encombrement, de diaphotie et de réglage étant alors supprimés. Toutefois, étant donné la différence des phénomènes physiques mis en œuvre dans une ligne à retard ultrasonique et dans une ligne à retard numérique, ces lignes ne doivent pas être placées au même étage du circuit intégré de décodage 1; et ce, notamment du fait qu'une ligne à retard ultrasonique agit sur des signaux à fréquence élevée, c'est-à-dire que l'on doit envoyer dans cette ligne à retard les signaux de chrominance avant leur démodulation, tandis qu'une ligne à retard numérique agit de préférence sur des signaux à plus faible fréquence et donc on lui envoie les signaux de chrominance démodulés. En conséquence, on a généralement pensé, pour utiliser une ligne à retard numérique plutôt qu'une ligne à retard ultrasonique, à modifier complètement l'architecture du circuit intégré 1. On augmente ainsi le coût du passage d'un circuit intégré à lignes ultrasoniques à un circuit intégré à lignes à retard numériques puisqu'il faut prévoir une reconception d'ensemble du circuit intégré.

A l'heure actuelle, les lignes à retard ultrasoniques sont encore généralement moins coûteuses que les lignes à retard numériques. Mais, l'évolution des technologies laisse penser que ce rapport de prix va prochainement s'inverser. Ainsi, la présente invention prévoit un moyen d'adaptation pour utiliser un circuit intégré 1 classique, normalement associé à une ligne à retard ultrasonique, et permettre l'utilisation de ce circuit avec une ligne à retard numérique sans aucune modification et, notamment, sans qu'il soit nécessaire de prévoir des bornes d'accès supplémentaires qui, comme cela est bien connu dans la technique, constituent un facteur important d'augmentation de coût d'un circuit intégré. Ainsi, un constructeur de téléviseur, utilisant normalement des circuits intégrés classiques associés à des lignes à retard ultrasonique, pourra, dès que le rapport des prix entre lignes à retard numérique et lignes à retard ultrasoniques s'inversera, employer selon l'intervention le même circuit intégré classique avec une ligne à retard numérique. Il pourra également, s'il souhaite faire des appareils de haut de gamme à ligne à retard numérique, même au prix d'une augmentation de coût, adapter sans difficulté une ligne à retard numérique tout en gardant le même circuit intégré classique comme élément principal du décodeur.

Pour atteindre ces objets, la présente invention prévoit un circuit de décodage de chrominance à ligne à retard numérique pour système de type PAL ou SECAM comprenant un circuit de décodage de chrominance classique comportant lui-même un circuit intégré muni de deux bornes normalement connectées à une ligne à retard analogique ultrasonique classique, par exemple à ondes de volume, et deux bornes de sortie fournissant normalement, quand la linge à retard classique est connectée, les signaux de chrominance R-Y et B-Y. Dans le circuit selon l'invention, la ligne à retard ultrasonique n'est pas utilisée et les bornes correspondantes ne sont pas connectées. Par contre, ce circuit de décodage comprend un circuit d'adaptation connecté aux bornes de sortie du circuit classique, ce circuit d'adaptation comprenant lui-même: une première voie reliant la première borne de sortie à une première entrée d'un premier sommateur, une deuxième voie reliant la deuxième borne de sortie à une première entrée d'un deuxième sommateur; et une troisième voie comprenant successivement: un commutateur à deux entrées et une sortie dont chacune entrée est alternativement connectée à chaque des bornes de sortie à une fréquence H1, un convertisseur analogique-numérique actionnée à une fréquence H2, une ligne à retard numérique actionnée à une fréquence H2, un convertisseur numérique-analogique, et un commutateur à une entrée et deux sorties, chaque sortie étant connectée à une deuxième entrée des premier et deuxième sommateurs à la fréquence H1. Ainsi, les sommateurs fournissent les signaux B-Y et R-Y recherchés.

La ligne à retard numérique peut être constituée d'un registre à décalage à n bits en parallèle et à p cellules, le nombre p étant tel que p/H2 soit égal au retard souhaité. Dans le cas du système PAL, on choisira de préférence pour H2 la fréquence de sous-porteuse et pour H1 la demi-fréquence de sous-porteuse. Dans le cas du système SECAM, on choisira pour H2 une fréquence égale à ou voisine de l'une des deux fréquences de sous-porteuse et pour H1 la demi-fréquence de ligne.

Ces objets, caractéristiques et avantages ainsi que d'autres de la présente invention seront exposés plus en détail dans la description ci-après d'un mode de réalisation particulier faite en relation avec les figures jointes parmi lesquelles:
- la figure 1, décrite précédemment, représente très schématiquement l'allure du signal vidéo composite pour deux lignes successives de télévision.
- la figure 2, décrite précédemment, représente très schématiquement la conception d'un décodeur de chrominance dans un système PAL ou SECAM,
- la figure 3 représente sous forme de blocs un circuit de décodage de chrominance classique selon le système SECAM,
- les figures 4A à 4D représentent symboliquement la succession de signaux reçus et fournis par un circuit de décodage de chrominance dans divers cas,
- la figure 5 représente sous forme de blocs un circuit d'adaptation selon la présente invention.

A titre de rappel, et pour mieux faire comprendre la présente invention, la figure 3 indique sous forme de blocs les constituants principaux d'un circuit de décodage de chrominance classique adapté au système SECAM. On retouve, désigné par le cadre en pointillés, le circuit intégré 1 de la figure 2 auquel est connectée une ligne à retard 2 par l'intermédiaire de bornes 3 et 4. Le circuit reçoit un signal vidéo composite I et en filtre les sous-porteuses de chrominance par un filtre en cloche 10 dont la sortie est appliquée à des limiteurs 11 et 12, d'une part directement, et d'autre part par l'intermédiaire de la ligne à retard 2. Chaque limiteur a sa sortie connectée à une entrée d'un circuit permutateur 13 qui connecte alternativement chacun des limiteurs à chacun de deux démodulateurs 14 et 15 sous la commande d'un signal en créneaux à la demi-fréquence de ligne $F_L/2$. La sortie de démodulateur 14 sur une voie A sera donc le signal de chrominance R-Y (ou B-Y) et le signal à la sortie du démodulateur 15 sur une voie B sera le signal de chrominance B-Y (ou R-Y). En fait, dans le système SECAM, les sous-porteuses de chrominance sont modulées en fréquence et les démodulateurs seront des discriminateurs de fréquence. Une description plus détaillée du circuit de la figure 3 pourra se trouver dans tout ouvrage de référence classique sur les téléviseurs couleur.

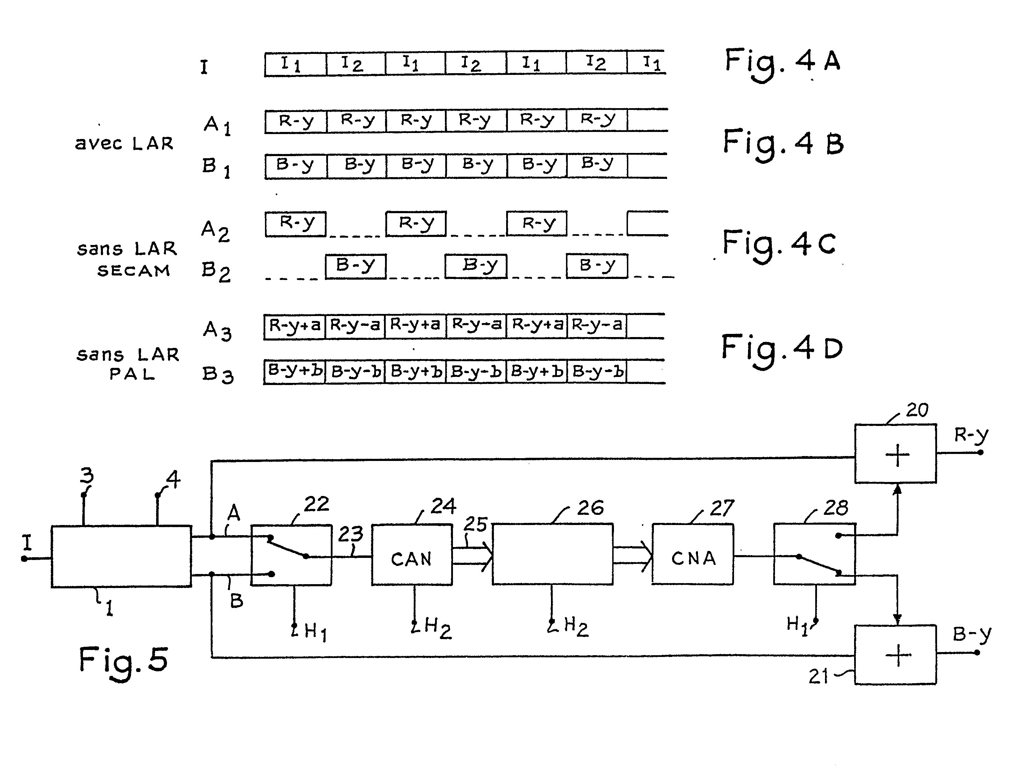

Comme le montre la figure 4A, si l'on considère les phases successives du signal I lors de chaque durée de ligne, on a, pendant une première durée de ligne, un signal $I_1$ correspondant à des informations R-Y, puis un signal $I_2$ correspondant à des informations B-Y et ainsi de suite. Les sorties normales du circuit de la figure 3 utilisant une ligne à retard sont les sorties A1 et B1 représentées en figure 4B composées d'une succession de signaux R-Y et d'une succession de signaux B-Y, respectivement.

Si l'on débranche ou plutôt si l'on ne branche pas la ligne à retard 2 aux bornes 3 et 4, on obtiendra sur la voie A et sur la voie B respectivement les signaux A2 et B2 illustrés en figure 4C, c'est-à-dire pendant la durée d'une ligne un signal R-Y suivi d'un blanc, suivi d'un signal R-Y suivi d'un blanc et ainsi de suite sur la voie A2, puis un blanc suivi d'un signal B-Y, suivi d'un blanc, suivi d'un signal B-Y et ainsi de suite sur la voie B2.

Pour ne pas alourdir la présente description, on ne reprendra pas en détail la structure d'un circuit de décodage de chrominance adapté au système PAL, mais on peut montrer qu'avec un tel circuit, si l'on supprime la ligne à retard, on trouve en sortie sur la voie A, un signal A3 comprenant successivement une information R-Y additionnée d'une constante a, puis une information R-Y à laquelle est soustraite cette constante a, c'est-à-dire une succession R-Y+a, R-Y-a, R-Y+a, R-Y-a et ainsi de suite. De même, sur la voie B, on trouve un signal B3 constitué d'une succession d'informations B-Y plus une constante b et B-Y moins une constante b, c'est-à-dire successivement des informations B-Y+b, B-Y+b, B-Y+b, B-Y-b et ainsi de suite. Les constantes a et b sont principalement dues à la diaphotie entre les démodulateurs et aux erreurs de phase de la transmission.

Le circuit d'adaptation selon la présente invention a pour but, en recevant des signaux tels que A2 et B2 ou A3 et B3, de refournir en sortie des signaux tels que A1 et B1.

La figure 5 représente un exemple de circuit d'adaptation selon la présente invention sous forme schématique. On peut y voir le circuit intégré 1 recevant le signal vidéo composite I et dont les bornes 3 et 4 ne sont pas connectées. Les voies A et B sont respectivement connectées à une première entrée d'additionneurs 20 et 21. Les voies A et B sont également reliées à chacune des entrées d'un commutateur 22 connectant alternativement chacune des entrées vers une sortie 23 reliée à un convertisseur analogique-numérique 24 alimentant par un bus 25 une ligne à retard numérique 26 constituée par exemple par un registre à décalage à plusieurs bits en parallèle, chacune des cellules d'entrée recevant l'un des bits de sortie du convertisseur analogique-numérique. La sortie de la ligne à retard numérique 26 est envoyée par l'intermédiaire d'un convertisseur numérique-analogique 27 à l'entrée d'un commutateur 28 à deux sorties, ce commutateur dirigeant alternativement le signal d'entrée vers chacune des sorties. Chacune des sorties du commutateur 28 est dirigée vers la deuxième entrée des sommateurs 20 et 21.

Le convertisseur analogique-numérique 24 et la ligne à retard 26 reçoivent une fréquence d'horloge H2, par exemple la fréquence de la sous-porteuse couleur dans le système PAL, cette même fréquence dans un système bistandard PAL-SECAM, et une fréquence fixe choisie, par exemple voisine de l'une des fréquences des sous-porteuses dans un système SECAM. Cette fréquence H2 est liée au nombre de cellules du registre à décalage 26 pour que l'on obtienne le décalage voulu, c'est-à-dire par exemple 64 microsecondes dans un système de télévision à 625 lignes classique. Rappelons que la fréquence de la sous-porteuse couleur dans le système PAL est de 4,43 MHz et qu'il faudra alors prévoir un registre de 284 cellules du type «fifo» (premier entré, premier sorti), ce registre pouvant comprendre six rangées de cellules en parallèle dans le cas où l'on estime qu'une précision de six bits est suffisante.

Les commutateurs 22 et 28 sont actionnés à une fréquence H1. Dans le cas du système PAL, où, comme le montre la figure 4D, il existe à tout instant un signal présent et devant être traité sur chacune des voies A et B, il convient de choisir une fréquence élevée comme fréquence d'aiguillage. Cette fréquence peut être par exemple la moitié de la fréquence de la sous-porteuse (2,215 MHz). Dans le cas du système SECAM, une vitesse de commutation aussi rapide est inutile puisqu'il n'existe pas de signaux simultanément présents sur chacune des voies A et B. Il suffira donc d'effectuer les commutations à la demi-fréquence ligne (de l'ordre de 7,8 kHz) bien qu'on puisse toutefois adopter si on le souhaite une fréquence de commutation plus élevée.

On voit donc qu'avec le dispositif selon la présente invention, on additionne au niveau de chacun des sommateurs 20 et 21 des informations présentes sur chacune des voies A et B et distantes de la durée d'une ligne. On obtiendra donc dans le cas des systèmes PAL et SECAM, des signaux directement proportionnels à R–Y et à B–Y. Ceci est clair dans le cas du système SECAM et on voit que dans le cas du système PAL, les constantes additives et soustractives s'éliminent.

L'ensemble des circuits représentés à la sortie des voies A et B peut simplement être intégrable sur un circuit intégré unique d'une complexité moyenne et l'on peut espérer que, dans un proche avenir, un tel circuit atteigne un coût inférieur à celui d'une ligne à retard ultrasonique.

## Revendications

1. Procédé de fabrication d'un circuit de décodage de chrominance, caractérisé en ce qu'il comprend les étapes suivantes:
– utiliser un circuit décodage de chrominance classique constitué notamment d'un circuit intégré (1) dont deux bornes (3, 4) sont destinées à être reliées à une ligne à retard analogique classique (2) et dont deux bornes de sortie (A et B) sont destinées à fournir les signaux de chrominance B–Y et R–Y,
– ne pas connecter la ligne à retard analogique,
– connecter les sorties du circuit à un circuit d'adaptation à ligne à retard numérique comprenant:
● une première voie reliant la première borne de sortie à une première entrée d'un premier sommateur (20),
● une deuxième voie reliant la deuxième borne de sortie à une première entrée d'un deuxième sommateur (21),
● une troisième voie comprenant successivement:
– un commutateur (22) à deux entrées et une sortie dont chaque entrée est alternativement connectée à chacune des sorties (A et B) du circuit intégré, à une fréquence H1,
– un convertisseur analogique-numérique (24) actionné à une fréquence H2,
– une ligne à retard numérique (26) actionnée à la fréquence H2,
– un convertisseur numérique-analogique (27),
– un commutateur (28) à une entrée et deux sorties, chaque sortie étant connectée à une deuxième entrée des premier et deuxième sommateurs à la fréquence H1, les sorties des sommateurs fournissant les signaux B–Y et R–Y.

2. Circuit de décodage de chrominance à ligne à retard numérique pour système du type PAL ou SECAM comprenant un circuit de décodage de chrominance classique comprenant lui-même un circuit intégré (1) muni de deux bornes (3, 4) normalement connectées à une ligne à retard analogique classique (2), par exemple à ondes de volume, et de deux bornes de sortie fournissant normalement, quand la ligne à retard classique est connectée, les signaux de chrominance R–Y et B–Y, caractérisé en ce que la ligne à retard n'est pas utilisée et que les bornes correspondantes ne sont pas connectées et en ce que ce circuit de décodage comprend en outre un circuit d'adaptation connecté aux bornes de sortie du circuit classique, ce circuit d'adaptation comprenant:
● une première voie reliant la première borne de sortie (A) à une première entrée d'un premier sommateur (20),
● une deuxième voie reliant la deuxième borne de sortie (B) à une première entrée d'un deuxième sommateur (21),
● une troisième voie comprenant successivement:

– un commutateur (22) à deux entrées et une sortie dont chaque entrée est alternativement connectée à chacune des sorties du circuit classique, à une fréquence H1,

– un convertisseur analogique-numérique (24) actionné à une fréquence H2,

– une ligne à retard numérique (26) actionnée à la fréquence H2,

– un convertisseur numérique-analogique (27),

– un commutateur (28) à une entrée et deux sorties, chaque sortie étant connectée à une deuxième entrée des premier et deuxième sommateurs, à la fréquence H1, les sorties des sommateurs fournissant les signaux B–Y et R–Y.

3. Circuit de décodage de chrominance selon la revendication 2, caractérisé en ce que la ligne à retard numérique est un registre à décalage à n bits en parallèle et à nombre de cellules p tel que p/H2 soit égal au retard souhaité.

4. Circuit de décodage de chrominance selon la revendication 2, adapté au système PAL, caractérisé en ce que la fréquence H2 est la fréquence de la sous-porteuse couleur et en ce que la fréquence H1 est égale à la moitié de cette fréquence.

5. Circuit de décodage de chrominance selon la revendication 2, adapté au système SECAM, caractérisé en ce que la fréquence H2 est une fréquence voisine des fréquences de sousporteuse couleur et en ce que la fréquence H1 est égale à la demifréquence ligne.

## Patentansprüche

1. Verfahren zur Herstellung eines Farbinformations-Decodierungsschaltkreises, dadurch gekennzeichnet, dass es folgende Schritte enthält:

– es wird ein herkömmlicher Farbinformations-Decodierungsschaltkreis verwendet, der insbesondere aus einem integrierten Schaltkreis (1) besteht, von dem zwei Anschlüsse (3, 4) dazu bestimmt sind, mit einer herkömmlichen, analogen Verzögerungsleitung (2) verbunden zu werden, und von dem zwei Ausgangsanschlüsse (A und B) dazu dienen, die Farbinformationssignale B–Y und R–Y zu liefern,

– die analoge Verzögerungsleitung wird nicht angeschlossen,

– die Ausgänge des Schaltkreises werden an eine Anpassungsschaltung mit einer digitalen Verzögerungsleitung angeschlossen, die folgende Bestandteile enthält:

● einen ersten Strompfad, der den ersten Ausgangsanschluss mit einem ersten Eingang eines ersten Summierers (20) verbindet,

● einen zweiten Strompfad, der den zweiten Ausgangsanschluss mit einem ersten Eingang eines zweiten Summierers (21) verbindet,

● einen dritten Strompfad, der nacheinander folgende Bestandteile enthält:

– einen Schalter (22) mit zwei Eingängen und einem Ausgang, wobei jeder Eingang mit einer Frequenz H1 wechselweise mit jedem der Ausgänge (A und B) des integrierten Schaltkreises verbunden wird,

– einen Analog-Digitalwandler (24), der mit einer Frequenz H2 betätigt wird,

– eine digitale Verzögerungsleitung (26), die mit einer Frequenz H2 betätigt wird,

– ein Digital-Analogwandler (27),

– ein Schalter (28) mit einem Eingang und zwei Ausgängen, wobei jeder Ausgang mit einem zweiten Eingang des ersten und des zweiten Summierers mit der Frequenz H1 verbunden wird, wobei die Ausgänge der Summierer die die Signale B–Y und R–Y liefern.

2. Farbinformations-Decodierungsschaltung mit digitaler Verzögerungsleitung für PAL- oder SECAM-Systeme mit einem herkömmlichen Farbinformations-Decodierungsschaltkreis, der seinerseits einen integrierten Schaltkreis (1) enthält, der mit zwei Anschlüssen (3, 4), die normalerweise mit einer herkömmlichen, analogen Verzögerungsleitung (2), die mit Volumenwellen arbeitet, verbunden sind, und mit zwei Ausgangsanschlüssen ausgestattet ist, die normalerweise, wenn die herkömmliche Verzögerungsleitung angeschlossen ist, die Farbinformationssignale R–Y und B–Y liefern, dadurch gekennzeichnet, dass die Verzögerungsleitung nicht verwendet wird und dass die entsprechenden Anschlüsse frei sind, weiterhin dadurch, dass die Decodierungsschaltung ferner eine Anpassungsschaltung enthält, die mit den Ausgangsanschlüssen des herkömmlichen Schaltkreises verbunden ist, wobei die Anpassungsschaltung folgende Bestandteile enthält:

● einen ersten Strompfad, der den ersten Ausgangsanschluss (A) mit einem ersten Eingang eines ersten Summierers (20) verbindet,

● einen zweiten Strompfad, der den zweiten Ausgangsanschluss (B) mit einem ersten Eingang eines zweiten Summierers (21) verbindet,

● einen dritten Strompfad, der nacheinander folgende Bestandteile enthält:

– einen Schalter (22) mit zwei Eingängen und einem Ausgang, wobei jeder Eingang mit einer Frequenz H1 wechselweise mit jedem der Ausgänge des herkömmlichen Schaltkreises verbunden ist,

– einen Analog-Digitalwandler (24), der mit einer Frequenz H2 betrieben wird,

– eine digitale Verzögerungsleitung (24), die mit einer Frequenz H2 betrieben wird,

– einen Digital-Analogwandler (27),

– einen Schalter (28) mit einem Eingang und zwei Ausgängen, wobei jedem Ausgang mit einem zweiten Eingang des ersten und des zweiten Summierers mit einer Frequenz H1 verbunden ist, wobei die Ausgänge der Summierer die Signale B–Y und R–Y liefern.

3. Farbinformations-Decodierungsschaltung nach Anspruch 2, dadurch gekennzeichnet, dass die digitale Verzögerungsleitung ein Schieberegister mit n Parallelbits und einer Zellenzahl p ist, die so gewählt ist, dass p/H2 gleich der gewünschten Verzögerung ist.

4. Farbinformations-Decodierungsschaltung nach Anspruch 2, die dem PAL-System angepasst ist, dadurch gekennzeichnet, dass die Frequenz H2 die Frequenz des Farbunterträgers ist und dass die Frequenz H1 gleich der Hälfte dieser Frequenz ist.

5. Farbinformations-Decodierungsschaltung nach Anspruch 2, die dem SECAM-System angepasst ist, dadurch gekennzeichnet, dass die Frequenz H2 eine der Frequenz des Farbunterträgers benachbarte Frequenz ist und dass die Frequenz H1 gleich der halben Zeilenfrequenz ist.

**Claims**

1. Method of producing a chrominance decoding circuit, characterized in that it comprises the following steps:
- using a conventional chrominance decoding circuit constituted, in particular, of an integrated circuit (1) two terminals of which (3, 4) are to be connected to a conventional analog delay line (2) and two output terminals (a and B) are adapted to supply the chrominance signals B–Y and R–Y,
- not connecting the analog delay line,
- connecting the outputs of the circuit to an adaptation circuit with a digital delay line comprising:
  ● a first path connecting the first output terminal to a first input of a first summer (20),
  ● a second path connecting the second output terminal to a first input of a second summer (21),
  ● a third path comprising in succession:
  - a switch (22) having two inputs and one output, each input being alternatingly connected at a frequency H1 to each of the outputs (A and B) of the integrated circuit,
  - an analog-digital converter (24) operated at a frequency H2,
  - a digital delay line (26) operated at the frequency H2,
  - a digital-analog converter (27),
  - a switch (28) having one input and two outputs, each output being connected to a second input of the first and second summers at the frequency H1, the outputs of the summers supplying the signals B–Y and R–Y.

2. Chrominance decoding circuit having a digital delay line, for a system of PAL or SECAM type, comprising a conventional chrominance decoding circuit in turn comprising an integrated circuit (1) having two terminals (3, 4) normally connected to a conventional analog delay line (2), for example of volume wave type, and two output terminals normally supplying, when the conventional delay line is connected, the chrominance signals R–Y and B–Y, characterized in that the delay line is not used and the corresponding terminals are not connected, and in that this decoding circuit further comprises an adaptation circuit connected to the output terminals of the conventional circuit, this adaptation circuit comprising:
● a first path connecting the first output terminal (A) to a first input of a first summer (20),
● a second path connecting the second output terminal (B) to a first input of a second summer (21),
● a third path comprising in succession:
- a switch (22) having two inputs and one output, each input being alternatingly connected to each of the outputs of the conventional circuits at a frequency H1,
- an analog-digital converter (24) operated at a frequency H2,
- a digital delay line (26) operated at the frequency H2,
- a digital analog converter (27),
- a switch (28) having one input and two outputs, each output being connected to a second input of the first and second summers at the frequency H1, the outputs of the summers supplying the signals B–Y and R–Y.

3. Chrominance decoding circuit according to claim 2, characterized in that the digital delay line is a shift register of n parallel bits and with a number of stages p such that p/H2 is equal to the desired delay.

4. Chrominance decoding circuit according to claim 2, adapted to the PAL System, characterized in that the frequency H2 is the frequency of the colour subcarrier and in that the frequency H1 is equal to half this frequency.

5. Chrominance decoding circuit according to claim 2, adapted to the SECAM system, characterized in that the frequency H2 is a frequency in the neighbourhood of the colour subcarrier frequencies and in that the frequency H1 is equal to one half of the line frequency.

B J T V M R B N          B J T V M R B N

Fig.1

3    64 µs  2
        4

I

A    R-y

B    B-y

1

Fig.2

Fig.3

1

10    11    13    14    A

I    limiteur    démodulateur    R-y

3

2    64 µs

4    12    15    B

limiteur    démodulateur    B-y

$F_{L}/2$

7

**Fig. 4A**

**Fig. 4B**

**Fig. 4C**

**Fig. 4D**

Fig. 5